# FASCICULE DE BREVET EUROPEEN

(11) **EP 2 644 973 B1**
(45) Date de publication et mention de la délivrance du brevet: **05.08.2020**
(21) Numéro de dépôt: 13161787.0
(22) Date de dépôt: 28.03.2013
(51) Int. Cl.: F21V 14/08, F21S 41/68

(54) **Mécanisme de coupure pour un module optique et module optique comprenant un tel mécanisme**
Abblendlichtmechanismus für ein optisches Modul, und optisches Modul, das einen solchen Mechanismus umfasst
Cut-off mechanism for an optical module and optical module including such a mechanism

(30) Priorité: 28.03.2012 FR 1252812
(43) Date de publication de la demande: 02.10.2013
(73) Titulaire: AML Systems, 75008 Paris (FR)
(72) Inventeur: Rivier, Cyril, 92400 COURBEVOIE (FR); Chiattelli, Claudio, 93150 LE BLANC-MESNIL (FR); Koulouh, Hassan, 93310 LE PRE SAINT GERVAIS (FR)
(74) Mandataire: Gevers & Orès

(56) Documents cités:
- EP-A1- 1 477 732
- FR-A1- 2 868 507
- GB-A- 2 379 101

## Description

L'invention concerne un mécanisme de coupure pour un module optique et un module optique comprenant un tel mécanisme de coupure. Ledit module optique est notamment destiné à s'insérer dans un projecteur automobile, en particulier dans un projecteur elliptique, installé à l'avant du véhicule automobile.

De tels modules optiques possèdent une source lumineuse qui projette de la lumière sur un réflecteur. La lumière est ensuite réfléchie sur une lentille afin d'être renversée et renvoyée sous forme de faisceau lumineux à l'extérieur du véhicule. Les modules optiques comprennent également un mécanisme de coupure permettant d'occulter ou non une partie du faisceau.

Il est connu d'utiliser des mécanismes de coupure comprenant une barrette de coupure rotative actionnée électriquement pour se déplacer, sur commande, d'une première position angulaire, dans laquelle elle occulte une partie du faisceau lumineux afin de limiter la portée du projecteur à celle des feux de croisement pour ne pas éblouir les autres conducteurs circulant en sens inverse, à une deuxième position angulaire, dans laquelle elle n'occulte pas le faisceau lumineux, la portée du projecteur correspondant alors à celle des feux de route.

Il existe également des projecteurs dits multi-fonctions, dans lesquels la barrette de coupure peut adopter plus de deux positions angulaires pour occulter de façon sélective le faisceau lumineux.

La barrette est actionnée électriquement par un actionneur comprenant un moteur électrique. Le moteur électrique comprend un stator et un rotor muni d'un ensemble de bobines, également appelé enroulements d'induits ou induit. L'induit présente un fil conducteur enroulé et donc une résistance, dite résistance d'induit, correspondant à la résistance du fil conducteur.

Le moteur est monté sur un boîtier en plastique du mécanisme de coupure. Du fait de l'encombrement disponible réduit dans le module optique pour disposer le moteur, il est connu d'utiliser des moteurs de petites tailles présentant un volume disponible pour les bobines et donc pour le fil conducteur faible. La longueur du fil conducteur est ainsi limitée. En effet, le couple du moteur étant proportionnel à la section du fil conducteur, la section ne peut être réduite au-delà d'un seuil permettant au moteur de présenter un couple suffisant pour actionner la barrette de coupure. Or, la résistance du fil conducteur, c'est-à-dire la résistance d'induit, étant proportionnelle à la longueur du fil conducteur, ce « petit » moteur présente ainsi une résistance d'induit faible, c'est-à-dire inférieure 25 ohms.

Ainsi, pour une tension donnée, l'intensité du courant qui traverse le moteur est importante et ce dernier est donc amené à dissiper beaucoup de puissance, ce qui entraîne un auto-échauffement du moteur important. Ce phénomène d'auto-échauffement est notamment défini par une température dite d'auto-échauffement.

En outre, la chaleur dégagée par la source lumineuse et par les rayons solaires qui entrent dans le module optique par l'intermédiaire de la lentille entraîne le réchauffement de l'environnement intérieur du module optique et donc du moteur. Ce phénomène de réchauffement est notamment défini par une température dite d'environnement.

L'auto-échauffement du moteur étant important, la température atteinte par le moteur, c'est-à-dire la somme des températures d'environnement et d'auto-échauffement, est également importante, ce qui risque d'endommager le boîtier en matière plastique sur lequel le moteur est monté.

Il est connu, pour remédier à cet inconvénient d'installer une carte électronique avec le moteur dans le module optique. La carte électronique réduit en effet l'intensité du courant qui traverse le moteur et donc la puissance que le moteur doit dissiper. Cependant, une telle installation est coûteuse et encombrante.

Une autre solution connu consiste à choisir le boîtier en métal, de part sa résistance aux fortes températures, mais ce matériau présente l'inconvénient d'être lourd et coûteux.

Un mécanisme de coupure comprenant toutes les caractéristiques du préambule de la revendication 1 est par exemple connu du document FR 2 868 507.

L'invention vise donc à améliorer la situation.

A cet effet, elle propose un mécanisme de coupure pour un module optique comprenant un boîtier et un moteur d'entraînement pourvu d'une résistance d'induit et agencé pour provoquer le mouvement d'une barrette de coupure d'un faisceau lumineux, ledit boîtier étant en matière plastique, caractérisé par le fait que ladite résistance d'induit est comprise entre 25 et 120 ohms.

Ainsi, grâce à l'augmentation de la résistance d'induit du moteur au-delà de 25 ohms, on propose de réduire l'intensité traversant le fil conducteur et donc de réduire la puissance que le moteur doit dissiper. Il n'est donc plus nécessaire de disposer une carte électronique avec le moteur. La température d'auto-échauffement du moteur est alors comprise entre 15 et 90°C et notamment entre 30 et 50°C. De cette manière, la température du moteur reste inférieure à 220° lorsque la source lumineuse du module optique fonctionne. Le boîtier support du moteur peut alors être choisi en manière plastique résistant à de telles températures, par exemple du PES (Polyéthylène Sulfure), PET (Polyéthylène Téréphtalate) ou du PBT (Polybutylène Téréphtalate).

L'augmentation de la longueur du fil conducteur s'obtient, notamment, grâce à une augmentation des dimensions du moteur. Ces dimensions étant limitées par l'encombrement maximum du mécanisme de coupure, on réduit, notamment, la section du fil conducteur dans le but d'augmenter sa longueur. Il en résulte une baisse du couple du moteur. Au-delà d'une résistance d'induit de 120 ohms, le moteur présente alors un couple insuffisant pour entraîner la barrette de coupure et/ou des dimensions incompatible avec la place disponible dans le module optique pour le mécanisme de coupure.

Dans une forme avantageuse de réalisation de l'invention, ladite résistance d'induit est comprise entre 40 et 90 ohms. De manière particulièrement avantageuse ladite résistance d'induit est sensiblement égale à 55 ohms. On entend par sensiblement, une tolérance de plus ou moins quinze pourcents autour de la valeur visée.

Selon une forme avantageuse de réalisation de l'invention, ledit moteur comprend au moins trois bobines. Le moteur comprend en particulier trois bobines. La présence d'au moins trois bobines dans le moteur permet de lui procurer un couple plus constant, par exemple, qu'un moteur présentant deux bobines. La présence d'au moins trois bobines permet d'entrainer un arbre du moteur relié à un pignon sur plus d'un demi-tour, c'est-à-dire sur plus de 180°, contrairement au moteur ne présentant que deux bobines. La présence de trois bobines permet d'entrainer l'arbre du moteur sur plus d'un demi-tour même en partant d'un état dans lequel l'arbre ne tourne pas encore. Grâce à la présence de trois bobines, le mouvement de rotation transmis à la barrette par le pignon peut être démultiplié tout en garantissant une rotation suffisante de la barrette entre sa première et sa deuxième position angulaire, c'est-à-dire une rotation supérieure à 60° de la barrette. Du fait de la démultiplication, le couple nécessaire pour entrainer la barrette est moins important ce qui permet de réduire d'avantage la section du fil conducteur et donc d'augmenter la résistance de l'induit, notamment jusqu'à 120 Ohms.

Selon un exemple de réalisation de l'invention, ledit mécanisme comprend ladite barrette de coupure.

Dans une forme intéressante de l'invention, un pignon du moteur entraîne ladite barrette de coupure par l'intermédiaire d'un engrenage, l'angle de rotation de la barrette étant inférieur à celui du pignon. L'engrenage est par exemple à denture intérieure. L'engrenage à denture intérieure permet d'augmenter la place disponible pour le moteur dans le mécanisme de coupure, notamment par rapport à une solution présentant un engrenage à denture extérieur. Il est alors possible de choisir un moteur plus grand et présentant une résistance d'induit plus importante sans augmenter l'encombrement général du module optique.

Avantageusement, le rapport d'engrenage entre le pignon du moteur et l'engrenage est compris entre 1/5 et 1/2. Il est en particulier de 1/3.

Dans une forme de réalisation de l'invention, ladite barrette s'étend majoritairement selon un premier plan, ladite barrette présentant une portion inclinée par rapport à ce premier plan dans une rotation selon un axe parallèle à un axe de rotation de la barrette. La portion inclinée permet à la barrette d'être entraînée sans entrer en contact avec le moteur. Elle permet ainsi d'augmenter la place disponible pour le moteur dans le mécanisme de coupure. Il est alors possible de choisir un moteur plus grand et présentant une résistance d'induit plus importante sans augmenter l'encombrement général du module optique.

Selon un exemple de réalisation de l'invention, ladite barrette est agencée pour faire une rotation d'au moins 75° entre une position verticale et une position inclinée.

Selon un aspect de l'invention, le moteur présente une longueur supérieure à 26 mm. Avantageusement, le moteur présente un diamètre supérieur à 21 mm. L'augmentation du volume du moteur, c'est-à-dire de sa longueur et/ou de son diamètre permet notamment d'augmenter sa résistance d'induit.

L'invention concerne aussi un module optique comprenant un mécanisme de coupure tel que décrit précédemment.

D'autres caractéristiques et avantages de l'invention apparaîtront encore mieux à la lecture de la description qui suit d'exemple de réalisation du module optique de l'invention en référence au dessin annexé, sur lequel :
- la figure 1 est une vue schématique en perspective d'un module optique avec un mécanisme de coupure;
- la figure 2 est une vue en perspective éclatée du mécanisme de coupure,
- la figure 3 est une vue en perspective du mécanisme de coupure illustré à la figure 2, une fois assemblé et
- la figure 4 est une vue schématique de coté de l'intérieur du moteur et de la barrette de coupure selon l'invention
- la figure 5 est une vue de coté du moteur et de la barrette de coupure selon l'invention.

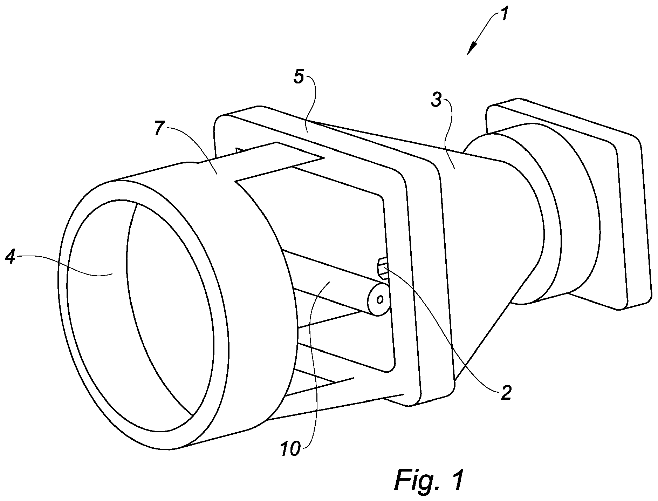

La figure 1 permet d'illustrer un module optique 1 selon l'invention. Dans un tel module optique se trouve une source lumineuse 2 produisant un faisceau lumineux réfléchi par un réflecteur optique 3. Le faisceau lumineux est alors projeté sur une lentille 4 qui le renverse et le renvoie sur la route située devant le véhicule dans lequel le module optique est positionné. La lentille 4 est disposée sur un porte lentille 7. La source lumineuse est ici une lampe à halogène.

Un mécanisme de coupure 5 est disposé entre le réflecteur 3 et la lentille 4. Ce mécanisme de coupure 5 permet d'obturer plus ou moins le faisceau lumineux, en réaction à une commande de l'utilisateur du véhicule ou à une commande automatique, afin de proposer différents modes d'éclairages de la route. Le mécanisme de coupure 5 comprend un moteur d'entraînement, notamment, à courant continu.

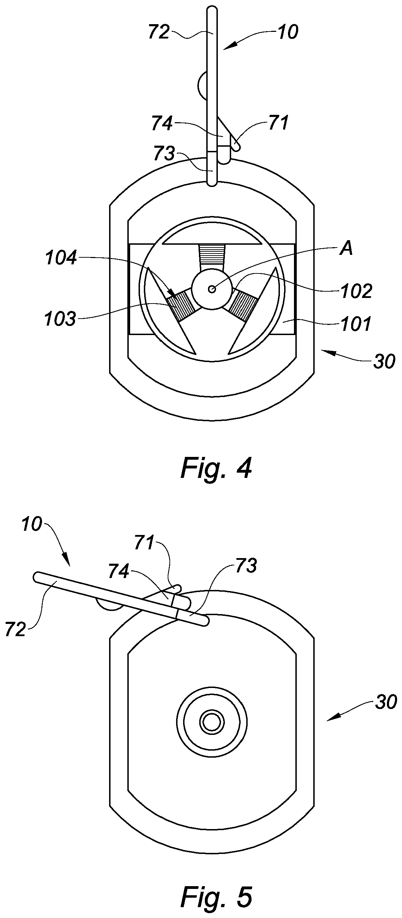

Comme illustré à la figure 4, le moteur 30 comprend un stator 101 également appelé inducteur et un rotor 102. Lorsque le moteur 30 fonctionne, le stator 101 crée un champ magnétique qui entraîne en rotation le rotor 102 autour d'un axe longitudinal A. Le mouvement de rotation est alors transmis à un pignon du moteur. Le moteur 30 comprend, par exemple, au moins trois bobines 103. On parle ici des bobines 103 du rotor 102, autrement appelée enroulements d'induits ou induit. Ces bobines 103 comprennent un fil conducteur 104, notamment en cuivre, et présentant une résistance, dite résistance d'induit. Le moteur 30 est ainsi pourvu d'une résistance d'induit.

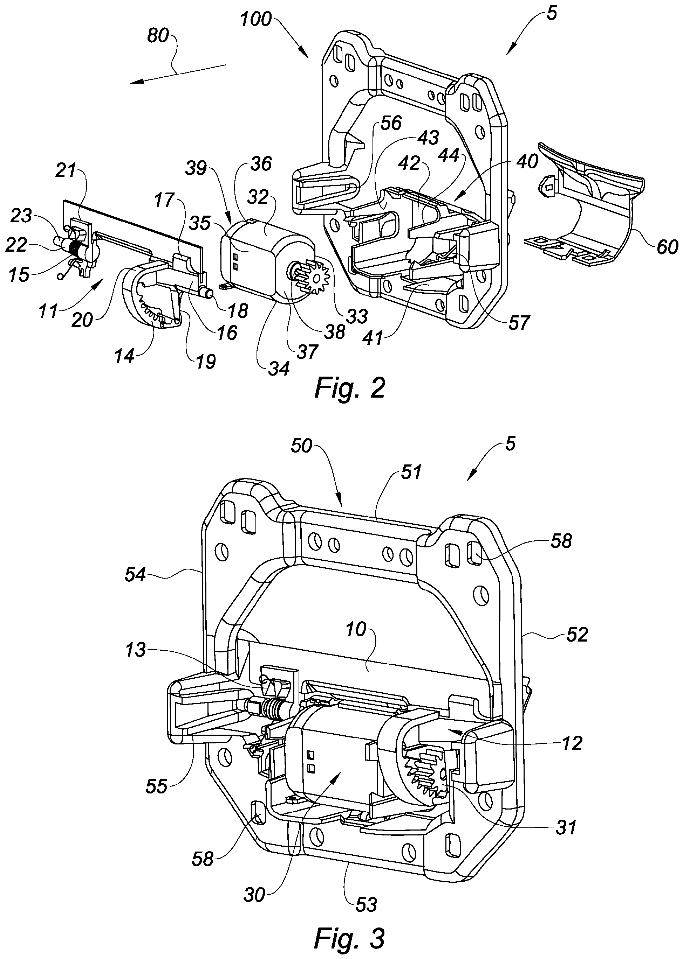

Ce mécanisme de coupure 5 va maintenant être décrit plus en détail grâce aux figures 2 et 3. Dans la suite de la description, les qualifications avant, arrière, droite, gauche, supérieure et inférieure sont définies par rapport au sens de marche avant du véhicule, c'est-à-dire par rapport au sens de la flèche référencée 80 sur la figure 2.

Le moteur 30 est agencé pour provoquer le mouvement d'une barrette de coupure 10 du faisceau lumineux. Le moteur 30 permet à la barrette 10 de se positionner selon plusieurs position, ici selon deux positions, afin d'obturer plus ou moins le faisceau lumineux. Pour cela, le moteur 30 comprend le pignon 31 d'entraînement. Ce pignon 31 est relié à un engrenage 14 à denture intérieure qui entraîne la barrette 10 en mouvement et notamment en rotation comme expliqué dans la suite. Selon l'invention, la résistance d'induit est comprise entre 25 et 120 ohms, notamment entre 40 et 90 ohms et en particulier sensiblement égale à 55 ohms. De telles résistances d'induit sont obtenues, notamment, grâce à un fil conducteur d'une section sensiblement égale à 0,09 mm. Dans le cas où le moteur comprend trois bobines, chacune d'entre elles comprend, par exemple, sensiblement 700 tours d'enroulement du fil conducteur.

La tension de fonctionnement du moteur est, par exemple, comprise entre 9 et 16V. La puissance à dissiper par le moteur est comprise, notamment, entre 1 et 4 Watts. La température d'auto-échauffement du moteur est alors limitée à 90°C et en particulier à 50°C.

Le moteur 30 comprend une face supérieure 32, une face arrière 33, une face inférieure 34, une face avant 35, une face droite 36 et une face gauche 37. La face supérieure 32 et la face inférieure 34, opposées entre elles sont de formes courbées. Elles définissent une partie de cylindre dont l'axe se situe au centre du moteur 30, c'est-à-dire ici au centre du pignon 31. Le moteur 30 prend alors la forme d'un cylindre coupé au niveau des faces avant 35 et face arrière 33.

Sur la droite du moteur 30, se situe une zone de connexion 39 agencée pour connecter le moteur 30 à une source d'énergie, par exemple une source de courant (non représenté). La zone de connexion 39 définit ainsi la face droite 36 du moteur 30 et une partie des faces supérieure 32, arrière 33, inférieure 34 et avant 35 située à droite du moteur 30.

Le moteur 30 présente une longueur inférieure à 35 mm, notamment sensiblement égale à 30,5 mm. Il présente un diamètre inférieur à 30 mm, par exemple sensiblement égal à 24,2 mm. Au-delà de l'une et/ou de l'autre de ces dimensions, le moteur présente le désavantage d'être lourd et/ou coûteux. Dans le but d'obtenir une résistance d'induit supérieure à 25 ohms, le moteur présente une longueur supérieure à 26 mm et/ou un diamètre supérieur à 21 mm. La longueur du moteur est mesurée selon l'axe du moteur passant par le pignon 31 du moteur mais ne comprend pas la longueur du pignon 31. La longueur du moteur est ainsi la distance entre sa face gauche 37 et sa face droite 36.

Au niveau de la face gauche 37 du moteur 30 se situe le pignon 31. Il est monté sur un arbre d'entraînement 38, faisant saillie par rapport à la face gauche 37 du moteur 30 et situé sensiblement au milieu de la face gauche 37 du moteur 30.

Le mécanisme de coupure 5 comprend un boîtier 100, notamment en matière plastique. Ce boîtier 100 comprend une armature 50 de forme sensiblement rectangulaire de sorte qu'elle possède quatre branches reliées entre elles, dites branche supérieure 51, branche gauche 52, branche inférieure 53 et branche droite 54. Le boîtier 100 comprend également un support 40 du moteur.

Le moteur 30 est monté sur le boîtier 100, notamment au niveau du support 40 de moteur. Ce support 40 de moteur est situé au centre et vers l'arrière de l'armature 50, c'est-à-dire entre le moteur et la source lumineuse, une fois le mécanisme de coupure 5 monté dans le module optique.

Le support 40 du moteur comprend une paroi inférieure 41 située en vis-à-vis de la face inférieure 34 du moteur 30, une paroi arrière 42 ou fond 42 située en vis-à-vis de la face arrière 33 du moteur 30, d'une partie arrière de la face supérieure 32 et d'une partie arrière de la face inférieure 34 de sorte que le moteur 30 est au contact de la paroi arrière 42. Le support 40 de moteur comprend également une paroi droite 43 en forme de U, une branche centrale du U étant disposée vers l'arrière verticalement et les deux branches latérales du U étant sensiblement parallèles entre elles, horizontales et dirigées vers l'avant. La paroi droite 43 du support 40 de moteur définit ainsi une entaille à l'intérieure de laquelle un bossage (non visible) de la zone de connexion 39, par lequel le moteur se connecte à la source de courant, s'insère et se solidarise avec le support 40 de moteur. De la même manière, le support 40 du moteur comprend une paroi gauche 44 en forme de U, une branche centrale du U étant disposée vers l'arrière verticalement et les deux branches latérales du U étant sensiblement parallèles entre elles, horizontales et dirigées vers l'avant. La paroi droite 43 du support 40 de moteur définit ainsi une entaille à l'intérieure de laquelle l'arbre 38 comprenant le pignon 31 peut s'insérer, le pignon 31 dépassant alors au-delà du support 40 du moteur 30 vers la gauche.

Le mécanisme de coupure 5 comprend également un écran thermique 60 épousant une face externe de la paroi arrière 42 du support 40 du moteur 30, c'est-à-dire une face dirigée vers l'arrière. L'écran thermique 60 est ainsi situé entre le support 40 de moteur et la source lumineuse. Il est en métal de sorte qu'il protège le support 40 de moteur et le moteur 30 de la chaleur dégagée par la source lumineuse.

La barrette de coupure 10 fait partie du mécanisme de coupure 5. Elle est agencée pour obturer plus ou moins le faisceau lumineux, c'est-à-dire pour couper plus ou moins le faisceau lumineux. La barrette s'étend majoritairement selon un premier plan. La barrette 10 peut se positionner ici selon deux positions, une première position dans laquelle elle obture partiellement le faisceau lumineux et correspondant aux feux de code et une deuxième position dans laquelle elle n'obture pas le faisceau lumineux et correspondant aux feux de route. Dans sa première position, la barrette de coupure 10 s'étend selon un plan sensiblement vertical alors que dans sa deuxième position elle s'étend dans un plan sensiblement horizontal, par exemple incliné sensiblement de 75° par rapport à la verticale. Il s'agit ici d'un mécanisme de coupure 5 bi-fonction.

La barrette de coupure 10 est positionnée en face de la source lumineuse. Elle est montée sur un support 11 de barrette comprenant une première partie 12 disposant de l'engrenage 14 à denture intérieure, située au niveau d'une première extrémité longitudinale de la barrette 10 et une deuxième partie 13 disposant d'un ressort de rappel 15 tendant à ramener la barrette 10 dans sa première position, c'est-à-dire dans sa position sensiblement verticale, la deuxième partie 13 étant située au niveau d'une deuxième extrémité longitudinale de la barrette 10. La barrette de coupure 10 est en acier afin de résister aux fortes chaleurs émises par la source lumineuse alors que la première partie 12 et la deuxième partie 13 du support 11 de barrette sont en plastique, car excentrées par rapport à la source lumineuse et donc moins sollicitées que la barrette 10 aux chaleurs émises par la source lumineuse. Le ressort 15 de la deuxième partie 13 est cependant en métal. La première extrémité longitudinale est située à gauche de la barrette 10 alors que la deuxième extrémité longitudinale est située à droite de la barrette 10.

La deuxième partie 13 comprend une pince 21 pinçant la barrette par le bas et de part et d'autre de celle-ci, c'est-à-dire qu'elle la pince sur une face avant et sur une face arrière de la barrette 10 afin de la soutenir. La pince 21 de la deuxième partie 13 prend naissance au niveau d'un bras 22, que comprend la deuxième partie 13, s'étendant parallèlement à un axe d'extension longitudinale de la barrette 10. Au niveau d'une extrémité distale du bras 22 située à droite, se trouve une excroissance 23 s'étendant au-delà de la barrette 10 vers la droite. Le ressort 15 est ici enroulé autour du bras 22 de la deuxième partie 13 et exerce une force de rappel sur la pince 21 de la deuxième partie 13.

La première partie 12 du support 11 de barrette comprend un corps central 16 de forme sensiblement parallélépipédique duquel naît une pince 17 pinçant la barrette 10 par le bas afin de la soutenir. La pince 17 de la première partie 12 est similaire à la pince de la deuxième partie 13, c'est-à-dire qu'elle pince la barrette 10 sur une face avant et sur une face arrière de cette dernière. La première partie 12 du support 11 comprend également une excroissance 18, faisant saillie par rapport au corps central 16, vers la gauche et s'étendant au-delà de la barrette 10 vers la gauche.

Du corps centrale 16 naissent également deux bras, dits premier et deuxième bras 19, 20. Le premier bras 19 s'étend dans un plan commun avec la barrette 10, perpendiculairement à la direction d'extension longitudinale de la barrette 10. Le deuxième bras 20 s'étend selon une direction perpendiculaire au plan dans lequel s'étend la barrette 10, c'est-à-dire perpendiculairement au premier bras 19. L'engrenage 14 à denture intérieure lie le premier bras 19 au deuxième bras 20 et est de forme sensiblement circulaire de sorte qu'il forme entre le premier et le deuxième bras 19 , 20, un quart de cercle.

Le rapport d'engrenage entre le pignon 31 du moteur 30 et l'engrenage 14 est ici de 1/3. La présence d'au moins trois bobines permet d'entrainer le pignon sur plus de 180° autour de son axe de rotation, de manière à entrainer la barrette de coupure sur plus de 60° autour de son axe de rotation lorsque le rapport d'engrenage est de 1/3. Avec une rotation de 360°, le pignon pourra alors entrainer la barrette de coupure dans une rotation de 120°. Le rapport d'engrenage pourrait bien sûr être différent, en fonction du couple du moteur et/ou de la rotation de la barrette désirée. Il sera en particulier compris entre 1/5 et 1/2.

Le fait que l'engrenage 14 soit à denture intérieure permet de reculer le moteur 30 par rapport à l'armature 50 et de réduire ainsi l'encombrement du mécanisme de coupure 5 tout en gardant un rapport d'engrenage de 1/3 nécessaire à l'entraînement en rotation de la barrette 10.

Le support 11 de barrette est monté sur l'armature 50. Sur la branche droite 54 de l'armature 50 se situe une rainure 55 de forme évasée vers l'avant et disposant d'une ouverture 56 au niveau d'une extrémité arrière, agencée pour recevoir l'excroissance 23 de la deuxième partie de support 13. L'excroissance 23 de la deuxième partie 13 du support 11 de barrette est ainsi insérée dans la rainure 55 depuis l'avant vers l'arrière jusqu'au moment où elle pénètre dans l'ouverture 56. De la même manière, sur la branche gauche 52 de l'armature 50 se situe une rainure 57, de forme similaire à la rainure de la branche droite 54, c'est-à-dire de forme évasée vers l'avant et disposant d'une ouverture (non visible) au niveau d'une extrémité arrière, agencée pour recevoir l'excroissance 18 de la première partie de support 12.

L'armature 50 comprend en outre des alésages 58, répartis sur ses branches 51, 52, 53, 54 et agencés pour monter le mécanisme de coupure 5 dans le module optique.

On remarque ici que la barrette 10 comprend un axe de rotation défini par les excroissances 18, 23. Cet axe de rotation est décalé par rapport à l'axe de rotation du moteur 30, c'est-à-dire l'axe de rotation du pignon 31. L'axe de rotation de la barrette 30 est situé, notamment, au dessus de l'axe de rotation du moteur selon un axe vertical.

Les figures 4 et 5 permettent d'illustrer une forme particulièrement avantageuse de l'invention selon laquelle la barrette présente une portion inclinée 71. La figure 4 représente la barrette 10 dans sa première position, c'est-à-dire sa position verticale. La position verticale correspond à la position dans laquelle la barrette de coupure obture le faisceau lumineux afin de limiter la portée du projecteur à celle des feux de croisement. La figure 5 représente la barrette 10 dans sa deuxième position, c'est-à-dire sa position inclinée de sensiblement 75° par rapport à la verticale. La position inclinée correspond à la position dans laquelle elle n'occulte pas ou presque pas le faisceau lumineux, la portée du projecteur correspondant alors à celle des feux de route.

La portion inclinée 71 se situe sur une zone centrale de la barrette 10. La zone centrale est ici située au dessus du moteur 30. La portion inclinée 71 occupe une bande inférieure de la barrette 10, c'est-à-dire une bande proche du moteur 30. Elle est inclinée vers l'arrière du mécanisme de coupure. Elle est inclinée selon un axe de rotation parallèle à l'axe de rotation de la barrette. La barrette 10 comprend également une paroi plane 72 s'étendant dans le premier plan. La paroi plane 72 est ici située au dessus de la paroi inclinée 71. Des parties de la paroi plane 72, dites première et deuxième languettes 73 se prolongent de part et d'autre de la paroi inclinée 71, c'est-à-dire de chaque cotés d'extrémités longitudinales de la paroi inclinée 71. Des ailettes 74 relient les extrémités longitudinales de la paroi inclinée 71 aux languettes 73. Les languettes 73 se situent de part et d'autre du moteur 30, c'est-à-dire au delà des faces gauches et droites du moteur 30. Lorsque la barrette 10 change de position, les languettes 73 n'entrent donc pas en contact avec le moteur 30.

La portion inclinée 71 de la barrette 10 permet, lorsque la barrette est dans sa position verticale, d'obstruer suffisamment le faisceau lumineux pour permettre au projecteur d'éclairer la route en feux de croisement. Elle permet à la barrette d'effectuer un mouvement de rotation de sensiblement 75 ° autour de son axe de rotation, sans entrer en contact avec le moteur. Cette rotation permet à la barrette 10 d'atteindre sa deuxième position et de laisser libre le faisceau lumineux pour permettre au projecteur d'éclairer la route en feux de route. Cette inclinaison permet ainsi de libérer de l'espace pour le moteur, quelle que soit la position de la barrette.

C'est, notamment, grâce à la l'engrenage à denture intérieure et/ou à la forme de la barrette, c'est-à-dire la présence de la portion inclinée qu'il est possible de disposer un moteur de dimension supérieures dans le boîtier sans changer l'encombrement du module optique.

## Revendications

1. Mécanisme de coupure (5) pour un module optique comprenant un boîtier (100) et un moteur d'entraînement (30) pourvu d'une résistance d'induit et agencé pour provoquer le mouvement d'une barrette de coupure (10) d'un faisceau lumineux, ledit boîtier (100) étant en matière plastique, **caractérisé par le fait que** ladite résistance d'induit est comprise entre 25 et 120 ohms.

2. Mécanisme de coupure (5) selon la revendication 1, dans lequel ladite résistance d'induit est comprise entre 40 et 90 ohms ;

3. Mécanisme de coupure (5) selon la revendication 1 ou 2, dans lequel ladite résistance d'induit est sensiblement égale à 55 ohms.

4. Mécanisme de coupure (5) selon l'une des revendications 1 à 3, dans lequel ledit moteur (30) comprend au moins trois bobines.

5. Mécanisme de coupure (5) selon l'une des revendications 1 à 4, dans lequel ledit mécanisme (5) comprend ladite barrette de coupure

6. Mécanisme de coupure (5) selon la revendication 5, dans lequel un pignon (31) du moteur (30) entraîne ladite barrette de coupure (5) par l'intermédiaire d'un engrenage (14), l'angle de rotation de la barrette étant inférieur à celui du pignon.

7. Mécanisme de coupure (5) selon la revendication 6, dans lequel le rapport d'engrenage entre le pignon (31) du moteur (30) et l'engrenage (14) est compris entre 1/5 et 1/2.

8. Mécanisme de coupure (5) selon l'une des revendications 5 à 7, dans lequel ladite barrette (10) s'étend majoritairement selon un premier plan, ladite barrette (10) présentant une portion inclinée (71) par rapport à ce premier plan dans une rotation selon un axe parallèle à un axe de rotation de la barrette.

9. Mécanisme de coupure (5) selon l'une des revendications 5 à 8, dans lequel ladite barrette (5) est agencée pour faire une rotation d'au moins 75° entre une position verticale et une position inclinée.

10. Mécanisme de coupure (5) selon l'une quelconque des revendications précédentes, dans lequel le moteur présente une longueur supérieure à 26 mm.

11. Mécanisme de coupure (5) selon l'une quelconque des revendications précédentes, dans lequel le moteur présente un diamètre supérieur à 21 mm.

12. Module optique (1) **caractérisé par le fait qu'**il comprend un mécanisme de coupure (5) selon l'une des revendications 1 à 11.

## Patentansprüche

1. Abblendlichtmechanismus (5) für ein optisches Modul, das ein Gehäuse (100) und einen Antriebsmotor (30) umfasst, der mit einem Läuferwiderstand versehen und eingerichtet ist, um die Bewegung einer Abschaltleiste (10) eines Lichtstrahls zu verursachen, wobei das Gehäuse (100) aus Kunststoff besteht, **dadurch gekennzeichnet, dass** der Läuferwiderstand zwischen 25 und 120 Ohm liegt.

2. Abblendlichtmechanismus (5) nach Anspruch 1, wobei der Läuferwiderstand zwischen 40 und 90 Ohm liegt.

3. Abblendlichtmechanismus (5) nach Anspruch 1 oder 2, wobei der Läuferwiderstand im Wesentlichen gleich 55 Ohm ist.

4. Abblendlichtmechanismus (5) nach einem der Ansprüche 1 bis 3, wobei der Motor (30) mindestens drei Spulen umfasst.

5. Abblendlichtmechanismus (5) nach einem der Ansprüche1 bis 4, wobei der Mechanismus (5) die Abschaltleiste umfasst.

6. Abblendlichtmechanismus (5) nach Anspruch 5, wobei ein Ritzel (31) des Motors (30) die Abschaltleiste (5) über ein Radgetriebe (14) antreibt, wobei der Rotationswinkel der Leiste kleiner ist als der des Ritzels.

7. Abblendlichtmechanismus (5) nach Anspruch 6, wobei das Übersetzungsverhältnis zwischen dem Ritzel (31) des Motors (30) und dem Radgetriebe (14) zwischen 1/5 und 1/2 liegt.

8. Abblendlichtmechanismus (5) nach einem der Ansprüche 5 bis 7, wobei sich die Leiste (10) hauptsächlich gemäß einer ersten Ebene erstreckt, wobei die Leiste (10) einen Abschnitt (71) aufweist, der in Bezug auf diese erste Ebene in einer Rotation gemäß einer Achse parallel zu einer Rotationsachse der Leiste geneigt ist.

9. Abblendlichtmechanismus (5) nach einem der Ansprüche 5 bis 8, wobei die Leiste (5) eingerichtet ist, um eine Drehung von mindestens 75° zwischen einer vertikalen Position und einer geneigten Position auszuführen.

10. Abblendlichtmechanismus (5) nach einem der vorstehenden Ansprüche, wobei der Motor eine Länge größer als 26 mm aufweist.

11. Abblendlichtmechanismus (5) nach einem der vorstehenden Ansprüche, wobei der Motor einen Durchmesser größer als 21 mm aufweist.

12. Optisches Modul (1), **dadurch gekennzeichnet, dass** es einen Abblendlichtmechanismus (5) nach einem der Ansprüche 1 bis 11 umfasst.

## Claims

1. A cutoff mechanism (5) for an optical module comprising a housing (100) and a driving motor (30) provided with an armature resistance and being arranged to cause the movement of a light beam cutoff shield (10), said housing (100) being made of a plastic material, **characterized in that** said armature resistance is comprised between 25 and 120 Ohms.

2. The cutoff mechanism (5) according to claim 1, wherein said armature resistance is comprised between 40 and 90 Ohms.

3. The cutoff mechanism (5) according to claim 1 or 2, wherein said armature resistance is substantially equal to 55 Ohms.

4. The cutoff mechanism (5) according to any of claims 1 to 3, wherein said motor (30) comprises at least three coils.

5. The cutoff mechanism (5) according to any of claims 1 to 4, wherein said mechanism (5) comprises said cutoff shield.

6. The cutoff mechanism (5) according to claim 5, wherein a pinion (31) of the motor (30) drives said cutoff shield (5) through a gear (14), the rotational angle of the shield being lower than the rotational angle of said pinion.

7. The cutoff mechanism (5) according to claim 6, wherein the gearing ratio between the pinion (31) of the motor (30) and the gear is comprised between 1/5 and 1/2.

8. The cutoff mechanism (5) according to any of claims 5 to 7, wherein said shield (10) mainly extends in a first plan, said shield (10) having a tilted portion (71) with respect to such first plan in a rotation according to an axis parallel with a rotational axis of the shield.

9. The cutoff mechanism (5) according to any of claims 5 to 8, wherein said shield (10) is arranged to make a rotation of at least 75° between a vertical position and a tilted position.

10. The cutoff mechanism (5) according to any of the preceding claims, wherein the motor has a length higher than 26 mm.

11. The cutoff mechanism (5) according to any of the preceding claims, wherein the motor has a diameter higher than 21 mm.

12. An optical module (1) **characterized in that** it comprises a cutoff mechanism (5) according to any of claims 1 to 11.
